# EUROPEAN PATENT APPLICATION

(11) **EP 4 546 080 A1**
(43) Date of publication of application: **30.04.2025**
(21) Application number: 23827584.6
(22) Date of filing: 20.06.2023
(51) Int. Cl.: G06F 1/00, G09F 1/00

(54) **THERMAL FOOD TRANSPORT AND DELIVERY SYSTEM WITH ADVERTISING**

(30) Priority: 21.06.2022 MX 2022007825
(71) Applicant: Perez Carrera, Gustavo Adolfo, Huixquilucan, 52787 (MX)
(72) Inventor: Perez Carrera, Gustavo Adolfo, Huixquilucan, 52787 (MX)
(74) Representative: JD&P Patent Attorneys Joanna Dargiewicz & Partners
(86) International application number: PCT/MX2023/050038
(87) International publication number: WO 2023/249479

(57) **Abstract**

The present invention relates to a backpack-type thermal advertising system for the delivery of food and/or products, which is characterized by comprising a thermal container with dynamic and/or static advertising, with the advantages of being waterproof, leak-proof, containing one or more screens or devices for projecting advertising, which (s) are connected to a platform (SaaS), this being resistant to light blows, solar panel, safety signs, a chip connected to the platform-screen, thermal advertising system with an opening and closing sensor, associated with the platform chip, a GPS, interior light, speakers, camera on the front face or motion sensors as the case may be, seamless hot-pressed thermal advertising system made of polyethylene foam (EPE), food grade aluminum, ethylene -vinyl acetate (EVA), or similar materials with thermoplastic properties.

## Description

### FIELD OF INVENTION

The present invention relates to a thermal and advertising system for food delivery. More specifically, the invention relates to a backpack-type thermal container that also allows for dynamic and/or static advertising display. The container is self-charging with solar panels and has a plurality of technological components configured for information transfer, security and integrated service connections for real-time monitoring and management of advertising and pre-loaded by having a cache memory.

### BACKGROUND OF THE INVENTION

Backpacks adapted for home delivery of food or products have so far improved their characteristics to perfect insulation that allows for longer regular times in which food does not lose its ideal temperature during transport and delivery. That is, cold food can remain cold for longer so that it does not lose its physical characteristics suitable for consumption and similarly with hot food, so that it retains its ideal temperature for a longer period. This, regardless of the packaging that the food or product itself may have. Likewise, these types of containers have been improved to avoid leaks, and their size and weight are suitable so that people using the backpack can transport food and products through individual means of transport such as motorcycles, bicycles, scooters or even on foot.

A well-known fact is that, due to the growth and advancement of technologies, food and other product delivery services have increased, using a large number of people to make such deliveries, which can be seen in the urban landscape, where it is becoming more and more common to see these food and product delivery people, riding in individual units and carrying containers of food and various products on their backs. Therefore, with this increase in the demand for food and product delivery services at home, a need has been arisen to find functional solutions that allow taking advantage of the presence of food delivery people with passers-by, whether they travel on foot, by public transport or in private transport units.

It is known that 5 out of 10 delivery drivers for delivery apps such as Uber Eats, Didi Food, Rappi, among others, have suffered at least one accident, this is the highest rate recorded globally, according to a source from the International Labor Organization (ILO). These accidents are mainly due to the fact that delivery companies pressure delivery drivers to make deliveries in less time so that the products they transport can arrive in better condition, preserving their appropriate physical characteristics, as if they were consumed directly on site. Another fact that increases this risk of accidents is that the containers occupy colors that, although they may be bright or have reflective signs for identification, since they are all uniform, they are no longer perceptible to regular drivers who cannot identify them in traffic, mainly at times when natural light is decreasing or at times when it is dark, generating this an increase in road accidents.

Some proposals for backpacks that incorporate a certain level of technology aimed at personal use backpacks or "back-pack", such as the one presented in document CN 104905540 A, which discloses a bag for outdoor activities with an SOS (save our souls) function. The outer bag comprises an outer bag body (1) and straps (4), the outer bag body (1) comprises a front part (2), a top part (3), two side portions (6), a rear part (14) and a bottom part (16), the rear part (14) is provided with an air bag cushioning layer, the bottom part (16) is provided with a waterproof layer, the outer surface of the bottom of the front part (2) is provided with a first net bag (10), a flexible solar cell panel (11) is arranged in the first net bag (10), a second net bag (8) is arranged on the outer surface of the upper portion of the front part (2), a storage battery (9) is arranged in the second net bag (8), an environmental detection sensor (12) and an SOS emergency rescue light (13) are arranged on the straps (4), and the flexible solar cell panel (11) is electrically connected with the storage battery (9). As the SOS emergency rescue light (13) is arranged, a switch of the SOS emergency rescue light (13) is pressed in case of emergency, and SOS signals can be sent. This document mainly highlights that it comprises straps, solar panel and indicator light and that it facilitates its visibility to third parties, who can detect the person in order to avoid accidents, but it does not incorporate technology that allows them to be used as food containers that can maintain the ideal temperature of the same for a longer time during the transfer for the delivery of the product.

Another related document is US application 2005/0140331 A, which shows a backpack, comprising an internal battery in the bag, a solar panel assembly attached to the front exterior of the bag and a universal connection system cable. The solar panel assembly includes a solar panel. The solar panel charges the battery and provides power to an electronic device. The universal connection system cable connects the battery to the electronic device. The solar panel assembly protects the solar panel from damage. Cable routing channels are provided to route the universal connection system cable from the battery to the electronic device. The battery can be charged from an external source. However, this invention does not cover the purpose of being able to protect the user through elements that allow him to identify him more efficiently, nor does it provide technical elements that allow solving the problem of delivering food at its optimal temperature state.

On the other hand, document US 2008/0210728 A describes a backpack with a solar panel comprising: a solar panel assembly attached to the upper half of the backpack, in which the solar panel assembly protrudes at an angle of between 5 and 45 degrees above the front of the backpack to allow the user to walk and charge its batteries at the same time; a battery contained in the backpack and in electrical communication with the solar panel; an interchangeable battery recharging cable to recharge external devices that operate on a battery. It is a typical backpack for personal use whose main advantage is to have a solar panel as a power generating source for recharging other devices for personal use, it is not a backpack that can be used as a food container, nor a backpack with visual identification and safety elements to avoid accidents, even less, are they backpacks with thermal insulation, (21), among many other differences that it does not share with the present invention.

Other commercial backpacks like the one displayed on online shopping sites like Mercado Libre called "Shoulder Backpack LED Full Color Screen Portable Travel" which displays a backpack with the following features in its description: made of high quality waterproof fabric that protects your LED screen on rainy days, adjustable shoulder strap with soft pad easy to adjust the comfortable length. The honeycomb back pad allows air to flow, removes moisture and the bun stays dry. The ergonomic design of the backpack can effectively relieve shoulder pressure and travel easily. Large storage space with multiple convenient pockets to store your items and keep them tidy. Easy to use, you can customize the external panel freely after connecting it with your phone. Fixing belt to easily attach to your suitcase takes the weight off your phone. Suitable for travel, school, daily work and outdoor activities, meets your daily needs.
Specifications: material: oxford+polyester+pcu , led display: support version: gps /wifi/ gprs, support point: 64 * 64, screen size: 26 * 25cm, rated voltage: 5v/2a, power supply mode: charging communication mode treasure : wifi/ gprs / gps /4g, program support: text / image / animation, compatibility: ios / android bag size: 40 * 30 * 13cm / 15.7 * 11.8 * 5.1inch, item weight: 1.2kg / 2.6lb,1 x led shoulder bag. However, this backpack is not designed to solve the problem of transporting and delivering food while maintaining its temperature, nor does it establish visual elements that provide security to users.

The above are just some examples of "backpacks" that incorporate technologies for conventional use, however, the invention set forth in this document, as a whole, provides different advantages that are not found in containers that transport food and other products currently known and that do not solve current problems, nor propose innovative functions to the technical and safety problems generated by the traffic in the delivery of food and products through containers, by means of individual transport vehicles such as bicycles, motorcycles, scooters or on foot.

### BRIEF DESCRIPTION OF THE INVENTION

The present application discloses a backpack-type thermal system for transporting food and products, which has several advantages that go beyond just keeping food cold or hot according to requirements, in addition to not being damaged, being comfortable, self-sustaining, practical and useful. In addition, the present invention incorporates a visual mechanism on the outside of the container to be used as an alternative advertising medium that allows attracting the attention of third parties and clearly identifying the transporters of the food and products. The present invention consists of being a thermal advertising system, for the transport of food and other products such as medicines, supplements, ice and / or other objects sensitive to temperature, which has the characteristics of being thermal, waterproof, leak-proof , with screens or visual devices to project advertising, these screens or visual devices are connected to a SaaS platform (Software as a Service ), being resistant to light shocks. The container also includes a solar panel, safety signs, a chip connected to the platform-screen, a thermal advertising system with an opening and closing sensor, associated with the platform chip, interior light, a horn, a seamless hot-pressed thermal advertising system made of polyethylene foam (EPE), food-grade aluminum, ethylene -vinyl acetate (EVA), or similar materials with thermoplastic properties, a GPS, rear camera and opening sensor.

These characteristics are only the most representative, which will be evident when developing the functions in their different preferred modalities, as well as in the description of their accompanying figures.

### BRIEF DESCRIPTION OF THE FIGURES

Figure 1- Perspective view of the backpack-type thermal advertising system from the front side.

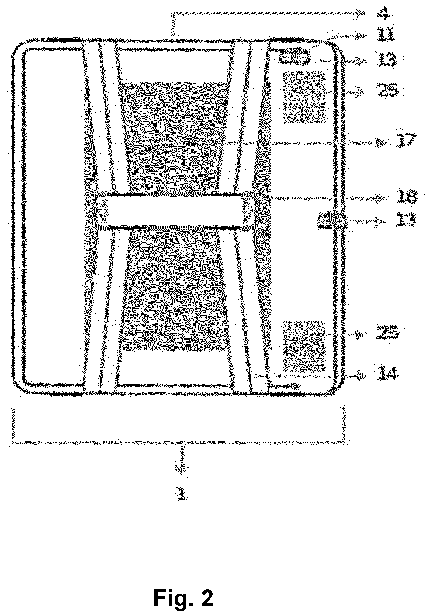

Figure 2- Perspective view from above, upper face.

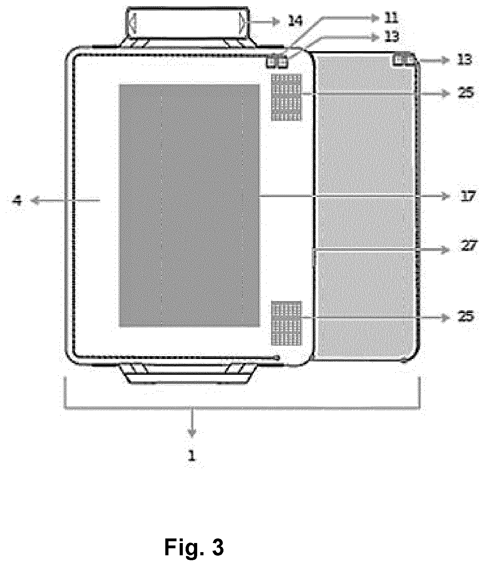

Figure 3- Perspective view from above, upper face with expandable compartment.

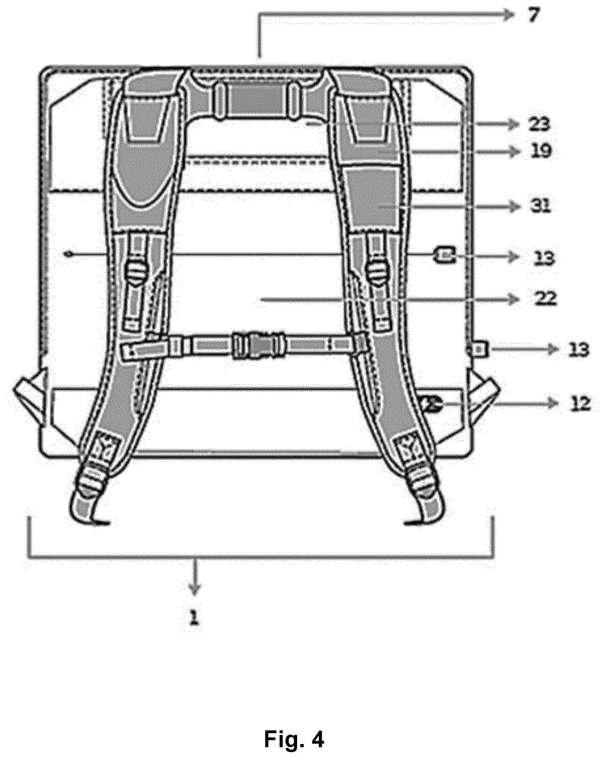

Figure 4- Perspective view of the back side.

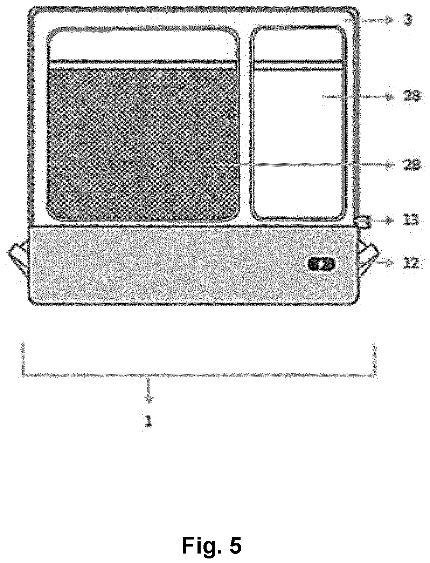

Figure 5- Perspective view of the rear face of the interior compartment.

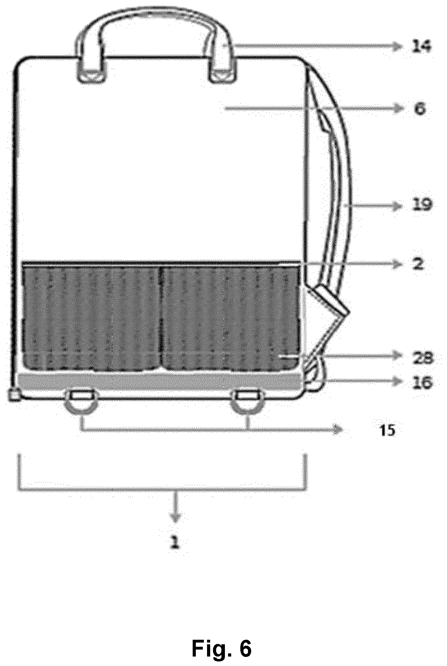

Figure 6- Perspective view of the right side.

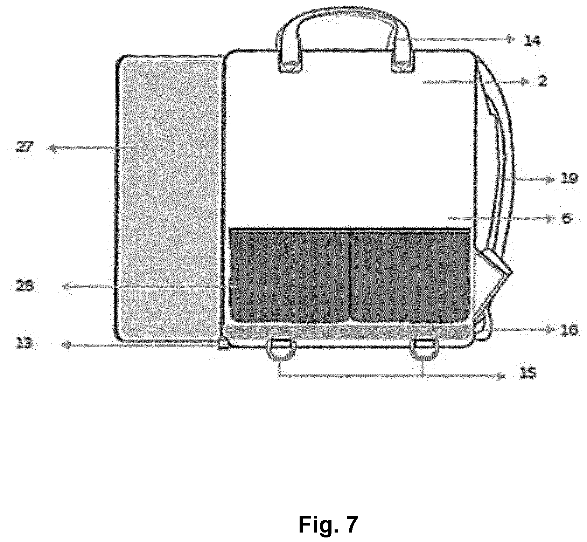

Figure 7- Perspective view of right side with expandable compartment.

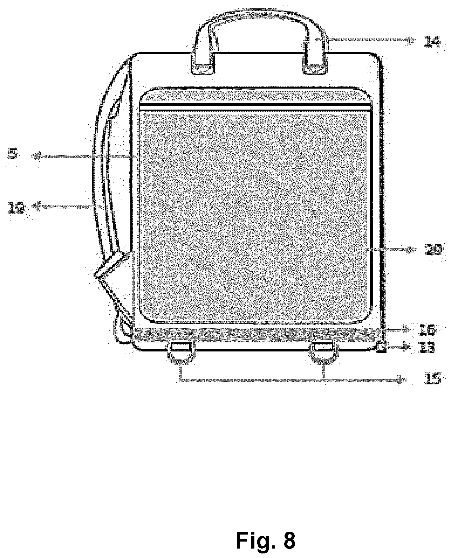

Figure 8- Perspective view of left side.

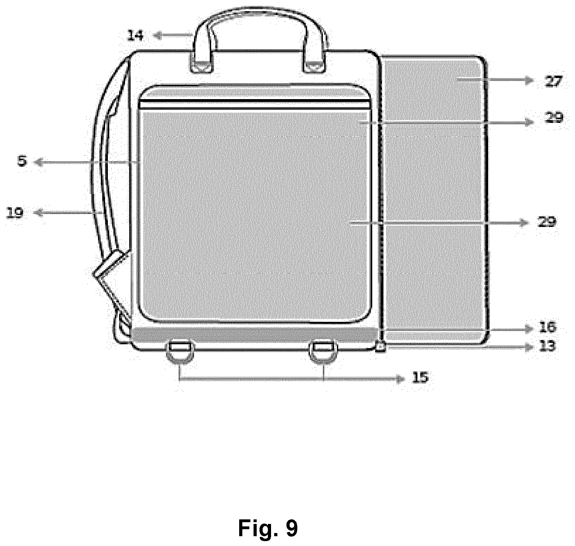

Figure 9- Perspective view of left side with expandable compartment.

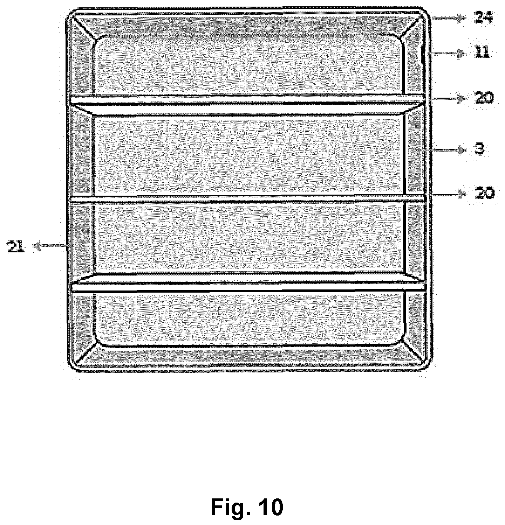

Figure 10- Perspective view of the interior of the backpack with various compartments.

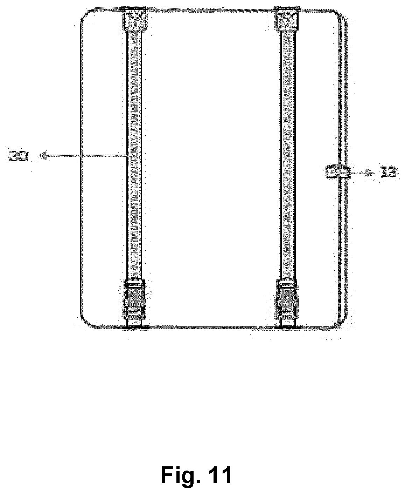

Figure 11- Perspective view of the underside of the backpack.

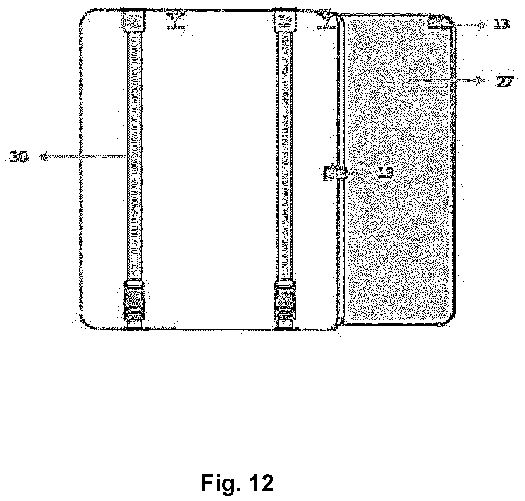

Figure 12- Perspective view of the bottom of the backpack with expandable compartment.
Figure 13- Perspective view of the front of the backpack with measurements.
Figure 14- Perspective view of the left side of the backpack with measurements

### DETAILED DESCRIPTION OF THE INVENTION

The speed demanded in today's world requires services in a short period of time, so meetings, meals or simply not investing time in cooking, giving rise to food or product delivery services being a highly sought-after alternative, so recan provide have quickly established a whole delivery network, as well as the emergence of applications (Apps) from different delivery companies, which use drivers or messengers to meet the existing demand and thus make delivery speed efficient, this notorious back and forth of delivery backpacks on the streets of modern cities, offers the possibility of promoting brands and services with a thermal advertising system that is capable of providing several advantages, from cost savings, energy savings, optimization of delivery time, security in receiving the merchandise and safety/comfort of the delivery person.

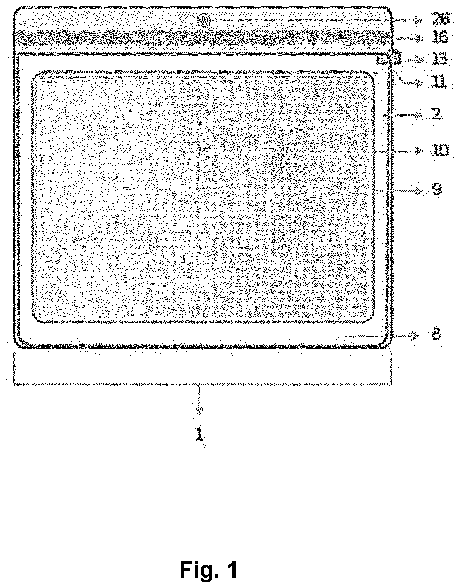

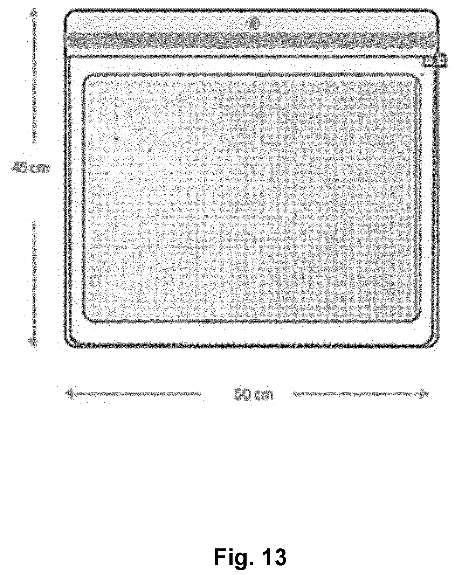

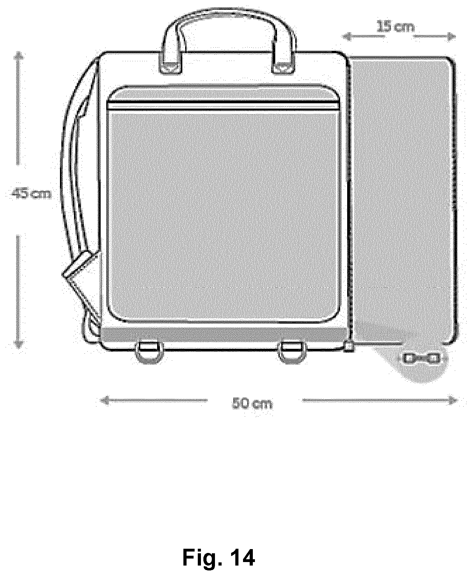

In a preferred embodiment, the backpack-type thermal advertising system (Fig. 1) is composed of a cubic portable container with dimensions specified in Fig. 13 and Fig. 14, storage that includes a body with an outer coating (2) and an inner coating (3), of waterproof and thermoplastic material, with ergonomic straps (19) and has a compartment so that users can store their cell phone (31) and on the left and/or right side face (5 and 6) they are prepared to also receive printed images of static advertising.

On the one hand, the outer covering (2), made of, but not limited to, reinforced polyester canvas with continuous PVC filament, or TPU fabric, resistant plasticized fabrics or similar materials with thermoplastic properties, is extremely resistant to rough use, is ideal for being exposed to the sun for long periods, and is also completely waterproof. Ideal for transporting food, products and fragile packages, on the outer covering of the backpack there is attached at least one receptacle (9) to place an advertising screen (10), either on the side faces (5 and 6), on the front face (8) that is exposed to the public, or on the three exposed faces, said receptacle(s) (9) are made of a transparent material that allows the viewing of the images that are projected from the screen (10), and in turn works as protection from rain, dust and does not contribute distortion to the images.

The advertising screen (10) that is placed in these receptacles is a screen that can be micro LED, LSD, Quantum DOT or NANO Cell which transmits static and/or dynamic images, either by fan with micro LEDs or other LED mechanisms, to show advertising either static or dynamic in the form of gif images, widgets or videos and images, this advertising transmitted to the screen (10) is regulated as described below.

In a preferred embodiment, the advertising broadcasted on the advertising screen (10) contained in the thermal advertising system (1) is managed by a chip connected to the screen that allows the content associated with a SaaS platform to be transmitted, through which the advertising content of each thermal advertising system is managed and programmed in a centralized manner. This platform allows the content of the advertising to be modified in real time or in a preloaded manner by its cache memory, which provides the advantage of redirecting the advertising depending on the transit area of the backpack-type thermal advertising system, which allows advertisers to make visible offers, campaigns or promotions of products from companies close to the transit area. In another embodiment, the screen of the backpack-type thermal advertising system can have a series of changing advertisements pre-programmed, that is, project for periods of time of up to 2 minutes an image, brand, figure, emblem, which will be replaced by another different image, brand, figure, emblem, with a set of indeterminate interchangeable images that are kept on repeat at the end of each advertising cycle.

The backpack type thermal advertising system platform used to manage the transmission of advertising to the screen of the backpack type thermal advertising system works through a platform (SaaS) which is designed according to the requirements of the user company from the cloud, and all its infrastructure and underlying technological platforms, to end users through an Internet browser or app that does not require the purchase or maintenance of the infrastructure, platforms and local software, are provided to the company through a periodic subscription, as well as the modification in the services provided, thanks to the availability of cloud models, it is therefore a simpler cost management through operating expenses (OPEX), instead of capital expenditure investments (CAPEX).

The platform (SaaS) that manages the advertising that is transmitted to the screen(s) of the backpack-type thermal advertising system of the invention, allows:

USER IDENTIFICATION, as it can store users' personal files (INE, driver's license, proof of address, license plates, etc.), even with the possibility of having facial recognition.

USER LINKING with the backpack-type thermal advertising system allows the platform to associate the user with the backpack delivered and the vehicle they use.

ALLOWS BRANDS TO UPLOAD THEIR CONTENT IN REAL TIME OR PRE-LOAD IT CENTRALLY BY THEIR INSTRUCTIONS. Brands can upload their content directly or through the central platform after registering and signing agreements to be responsible for their content in accordance with the applicable legal framework.

GPS. Allows the platform to provide timely geolocation tracking for each of the users who have the backpack-type thermal advertising system, measuring their routes and whether the screen is online or working with cache memory.

ALLOWS FOR GENERATION OF MULTIPLE USERS. The platform allows for the assignment of multiple users to load their advertising campaigns and change the advertising cycle in real time or in advance for periodic and preloaded cycles.

GROUPING BACKPACKS. The platform allows backpacks to be grouped by districts and in different groups to send segmented and targeted content to each of them in real time or preloaded.

ADVERTISING CONTENT. The platform allows you to upload advertising campaigns, whether with images, gifs or videos. From there you can control various characteristics such as brightness, image size, sharpness, colors, to comply in each single case with the applicable laws of the corresponding matter. Said content can be sent in real time from a centralized control, they can be scheduled by time or preloaded content that is projected periodically.

ONLINE AND OFFLINE PRODUCTS. The platform allows detecting which devices are online, and which are offline in order to notify delivery users to turn them on.

REPORTING. Allows you to generate measurement reports, such as the effective time content was played per product, the number of times it was viewed during the day, and you will be able to make approximations of how many people saw the campaigns.

PAYMENT FROM THE SYSTEM. Our system will allow brands to be paid through various payment methods, such as credit and debit cards and other forms of payment.

AIRTIME RECHARGES. Airtime recharges can be made to chips from the platform.

SURVEYS. The platform can send real-time surveys to users for them to carry out with customers according to the brands' requests.

ACTIVATIONS. You can send users to carry out activations for one or more brands at busy locations, during times when you are not on a delivery route.

STRATEGIC ALLIANCES. The platform integrates various applications from both the delivery industry food such as package delivery, pharmacies, etc. to generate campaigns and improve the services of users and clients.

COUPONS. Capture various conversions that are carried out with the backpack-type thermal advertising system to convert our brand clients' campaigns, such as QR code conversion or interrelations with other platforms.

DELIVERY. Possibility of delivering goods autonomously and being able to measure it through the system.

OPENING AND CLOSING SECURITY. Once the delivery package is placed inside the backpack, it is closed and the moment of closing is recorded, since it is activated by the zipper closure security. If the backpack is opened before delivery to the recipient, it is recorded.

The SaaS also has a cache memory that allows the storage of advertising campaigns that have been previously announced or that have contracted the service for a certain period of time. In addition, the advertising screen has a blocking system from the SaaS which can block the screen remotely.

In another preferred embodiment, the backpack type advertising thermal system has a solar panel (17) on its upper side that covers most of the surface of the upper side (4), which makes it sustainable and environmentally friendly, although it can be helped with removable batteries in case the solar charge is not sufficient, allowing the connection for charging mobile devices and screens, charging the external battery for the backpack display operation , as well as generating heat to keep food warm inside the backpack, the wiring to the USB inputs, screen connection and other switches are hidden between the inner and outer lining of the backpack.

In another preferred embodiment, the screen of the backpack-type thermal advertising system includes a GPS, which not only allows users of the backpacks to be located and their routes to be recorded in real time, but also allows the route to be predicted and, if desired, the type of advertising can be changed according to the route or the GPS-chip-Platform-SaaS information, remotely and in real time modifying the frequency of the advertisement, exposure time, advertising different advertisements of the same brand or advertisements of different brands.

In another preferred embodiment of this invention, the backpack type thermal advertising system has an opening and closing lock (11) that is located at the end of the zipper closure (13), the closure is a zipper and is substantially waterproof and in which the zipper comprises a puller, this security system is configured to identify the ant theft of food that can be consumed by the carrier or to guarantee the volumes or numbers of the merchandise that the restaurateur delivers in the event of possible customer claims, by recording that each transfer must have only one closing activation and one deactivation by opening, to selectively provide access to the stored merchandise through the opening when the zipper is open and configured to close and ensure its opening when the zipper is closed and the zipper puller is secured in the sensor. The activation and deactivation of the opening lock must be consistent with the estimated delivery times or by code.

All security means and technological devices are always controlled from the SaaS, since its compartmentalization design allows the SaaS user to have each and every one of the systems perfectly monitored and to easily identify when a device is out of service at the time it should be working, since it allows the "working" and "off" signals emitted by the SaaS itself to be notified.

As another preferred modality, the backpack-type thermal advertising system has a camera on the front or motion sensor, as the case may be (26) that will allow drivers to activate it on their cell phone to see what is happening behind them as a reverse camera. On the other hand, it also allows the platform to see an approximate number of cars and pedestrians impacted by the campaigns on the routes of the delivery users. It also allows viewing in case of accidents. On the other hand, it also allows the platform to see an approximate number of cars and pedestrians impacted by the campaigns on the routes of the delivery users. Alternatively, the backpack-type thermal advertising system has built-in speakers (25) to play sounds associated with the advertising transmitted to the screen.

The backpack-type thermal advertising system also has various mandatory elements, such as a fused, heavy-duty top handle, strongly attached with seams that resist up to 20 kilograms of load (18), a side handle (14), external and internal pockets for carrying cylinders or glasses (18), compartments for storing cell phones and metal fastening ears at various points, as well as reflective bands for traffic warning (16).

Finally, the advertising thermal system has a space at the bottom that can be alternatively released by means of a zipper, which when opened allows for more storage capacity (27), the outer lining is substantially made of reinforced polyester canvas with continuous PVC filament or similar, hot-pressed without seams that prevents rainwater from seeping into the backpack, as well as enhancing the maintenance of the temperature of cold or hot food for hours, and also does not allow liquids inside to come out in the event of a spill, in addition to having reflective bands exposed as traffic warnings.

On the other hand, the inner or internal lining (3) defines an internal storage volume within the internal container of the advertising thermal system with an opening that extends through the outer lining (2), and that is closed by means of the body zipper (13), the inner or internal lining has an insulation, made of polyethylene foam (EPE), food grade quality aluminum foil and Ethylene Vinyl Acetate (EVA), hot pressed without seams or similar materials with thermoplastic properties, maximizes heating and cooling efficiency, keeping hot items hot and cold items fresh for hours, easy to clean and durable.

In some embodiments, the inner bag may comprise a plurality of inner layers, such as two or more inner layers, such as most thermal backpacks, where each of the inner layers are made of thermally insulating materials, which is advantageous since two distinct but connected inner layers may provide better insulation than one thicker but lighter inner layer, that may be because the layer of air between the inner layers provides additional insulation. In addition, it may be easier and more efficient to manufacture or acquire thinner inner layers such as inner layers with a thickness of approximately 5 to 10 mm and combine them as needed, instead of manufacturing or acquiring thicker inner layers.

The backpack-type thermal advertising system has power cables from the solar panel (17), USB inputs (12), opening and closing sensor (11) that are protected between the inner lining and the outer lining so that the cables of the devices are thermally insulated.

It also has an interior light using LED light at the top, to view and manipulate the internal merchandise (24).

As we have stated, this document seeks to have a significant impact that involves making the most of the very existence of delivery , which, without a doubt, is here to stay as another example of progress in large cities, taking advantage of the swarm of people in vehicles and pedestrians, with a proposal for a thermal advertising system, multi-layer insulation, lightweight, and that incorporates cutting-edge technology with security means, service means for the transport user, sustainability means and comfort.

Thus, the present invention presents improved elements, with an advantageous arrangement for the transportation of food, which has the characteristics of being thermal, waterproof, leak-proof, screen or device for projecting advertising, said screen is connected to a platform (SaaS), and is a screen resistant to light blows, solar panel, safety or reflective signs (16), a chip connected to the platform-screen, thermal advertising system with an opening and closing sensor, associated with the platform chip, a GPS, interior light, speakers, camera on the front face or sensor, seamless hot-pressed thermal advertising system made of polyethylene foam (EPE), food grade aluminum and Ethylene -Vinyl Acetate (EVA), or similar materials with thermoplastic properties, with the possibility of increasing space by means of the expandable compartment (27).

### NUMERICAL REFERENCES OF THE INVENTION

1.- Backpack.
2.- Exterior coating.
3.- Interior lining.
4.- Upper face.
5.- Left side face.
6.- Right side face.
7.- Back side.
8.- Front face.
9.- Receptacle for transparent material screen.
10.- Advertising screen.
11.- Opening/closing sensor.
12.- USB port.
13.- Closing.
14.- Side handle.
15.- "D" shaped ring.
16.- Reflective signage.
17.- Solar Panel.
18.- Fused upper handle.
19.- Ergonomic straps.
20.- Adjustable separations.
21.- Thermal insulation.
22.- Upper padding.
23.- Bottom padding.
24.- Inner light.
25.-Horn.
26.- Camera / motion sensor.
27.- Backpack extension.
28.- Multiple compartments.
29.- Left receptacle for printed advertising.
30.- Lower hooks.
31.- Cell phone compartment.

## Claims

1. A backpack-type thermal advertising system for the transportation and delivery of food and products, **characterized in that** it has a screen to project advertising, said screen is associated with a SaaS platform that manages the advertising, a solar panel, a chip connected to the platform-screen, an opening and closing sensor associated with the platform chip, a GPS, interior light, speakers, camera or motion sensor on the front face, safety signs, seamless hot pressing made of polyethylene foam (EPE), food grade aluminum and Ethylene-Vinyl Acetate (EVA) or similar materials .

2. The backpack-type thermal advertising system for the transportation and delivery of food according to claim 1, further **characterized in that** at least one receptacle is attached to the external part to place an advertising screen that can be a micro LED, LSD, Quantum DOT or NANO Cell screen which transmits static or dynamic images, either by fan with micro LEDs or other mechanisms, to show advertising either static or dynamic in the form of gifs or widgets or videos and images, this advertising transmitted to the screen (10) is regulated by a platform (SaaS) in real time or preloaded.

3. The backpack-type thermal advertising system for the transportation and delivery of food according to claim 1, further **characterized in that** each backpack can contain at least one screen on the front face of the backpack, two screens on the side faces of the backpack and up to three screens arranged on the side faces and on the front face.

4. The backpack-type thermal advertising system for the transportation and delivery of food according to claim 1, further **characterized in that** the advertising is managed by a chip connected to the screen that allows the transmission of the content associated with a SaaS platform, through which the advertising content of each thermal advertising system is centrally managed and programmed, this platform allows the content of the advertising to be modified in real time, redirecting the advertising depending on the transit area of the backpack-type thermal advertising system, which allows advertisers to make visible offers, campaigns or promotions of products from companies close to the transit area.

5. The backpack-type thermal advertising system for the transportation and delivery of food according to claim 1, further **characterized in that** the advertising on the screen can have a pre-programmed series of changing advertisements, that is, project for periods of time of up to 2 minutes an image, brand, emblem, which will be replaced by another different image, brand, figure, emblem, with a set of indeterminate interchangeable images that are kept repeating at the end of each advertising cycle.

6. The backpack-type thermal advertising system for the transportation and delivery of food according to claim 1, further **characterized in that** the SaaS also has a cache memory that allows storing previously announced advertising campaigns or those that contracted the service for a certain period of time. Likewise, the advertising screen has a blocking system from the SaaS which can block the screen remotely and in real time.

7. The backpack-type thermal advertising system for the transportation and delivery of food according to claim 1, further **characterized in that** the energy is obtained by means of a solar panel that covers most of the surface of the upper face, which makes it sustainable and friendly to the environment and allows generating energy for the connection for charging mobile devices, charging the external battery for the operation of the backpack display, as well as generating heat to keep the food warm inside the backpack, the wiring to the USB inputs, screen connection and other switches are hidden between the inner and outer lining of the backpack.

8. The backpack type thermal advertising system for the transportation and delivery of food according to claim 1, further **characterized in that** it has an opening and closing lock that is located at the end of the zipper closure, this security system is configured for a closing activation and a deactivation by the opening, to selectively provide access to the stored merchandise through the opening when the zipper is open and to close and secure its opening when the zipper is closed and the zipper puller is secured in the sensor. The activation and deactivation of the opening lock must be consistent with the estimated delivery times or by code.
